# FASCICULE DE BREVET EUROPEEN

(11) **EP 3 209 538 B1**
(45) Date de publication et mention de la délivrance du brevet: **14.08.2019**
(21) Numéro de dépôt: 15781392.4
(22) Date de dépôt: 29.09.2015
(51) Int. Cl.: B62D 25/06

(54) **TRAVERSE DESTINÉE À PARTICIPER À L'INSONORISATION D'UN VÉHICULE AUTOMOBILE**
QUERTRÄGER ALS BEITRAG ZUR SCHALLDÄMPFUNG EINES KRAFTFAHRZEUGS
CROSSMEMBER INTENDED FOR CONTRIBUTING TO THE SOUNDPROOFING OF A MOTOR VEHICLE

(30) Priorité: 20.10.2014 FR 1460079
(43) Date de publication de la demande: 30.08.2017
(73) Titulaire: Renault S.A.S., 92100 Boulogne-Billancourt (FR)
(72) Inventeur: FRANCU, Constantin, Ilfov (RO)
(86) Numéro de dépôt international: PCT/FR2015/052597
(87) Numéro de publication internationale: WO 2016/062934

(56) Documents cités:
- EP-A1- 2 039 593
- WO-A1-2012/168612
- US-A- 5 318 338

## Description

### Domaine technique de l'invention

L'invention concerne le domaine de l'automobile, et plus particulièrement du confort sonore à l'intérieur d'un habitacle de véhicule automobile.

L'invention a pour objet plus particulièrement une traverse configurée de sorte à participer à l'insonorisation d'un véhicule automobile.

### État de la technique

Il est connu dans le domaine de l'automobile de traiter certaines parties du véhicule de sorte à améliorer l'insonorisation de l'habitable. Il existe notamment des plaques, aussi connues sous le nom d'insonorisant feuille fusible (IFF), qui sont collées sur des zones planes de la caisse (panneau de côté caisse, pavillon de toit, plancher, etc.) afin d'en améliorer la réponse acoustique.

Les IFF peuvent être de deux types :
- IFF tôlerie, installés sur des parties de tôle non accessibles après assemblage du véhicule,
- IFF peinture, installés typiquement pendant ou après des étapes de mise en peinture du véhicule.

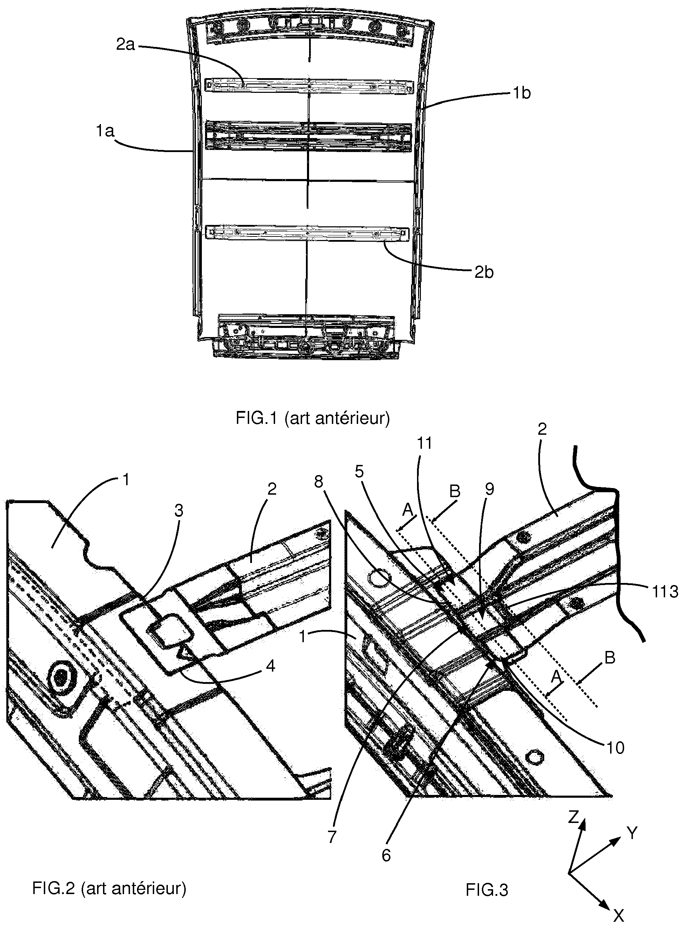

Le problème majeur des IFF décrits ci-dessus est leur coût. Pour cela, il a été proposé de les remplacer par des traverses d'insonorisation soudées à une partie correspondante du véhicule comme l'illustre les figures 1 et 2. En particulier, sur la figure 1 il est représenté deux arceaux longitudinaux 1a, 1b délimitant une partie de l'habitacle du véhicule automobile, ces deux arceaux 1a, 1b étant reliés par deux traverses acoustiques 2a, 2b. Au niveau de chaque liaison entre un arceau et une traverse (figure 2), deux surfaces d'appui 3, 4, respectivement d'un arceau 1 correspondant et de la traverse 2 correspondante, sont mises en contact et soudées. Un tel agencement est décrit dans le document WO2012/168612-A1. Il en résulte une problématique de positionnement sur les chaînes d'assemblage pour faciliter notamment le travail des opérateurs.

### Objet de l'invention

Le but de la présente invention est de proposer une solution facilitant l'assemblage d'une traverse destinée à l'insonorisation d'un véhicule avec une partie de véhicule automobile.

On tend vers ce but grâce à une traverse configurée de sorte à participer à l'insonorisation d'un véhicule automobile, ladite traverse acoustique comportant au moins une extrémité d'accostage destinée à l'assemblage de ladite traverse à une partie correspondante du véhicule automobile, caractérisée en ce que l'extrémité d'accostage comporte des première, deuxième et troisième surfaces d'appui distinctes destinées à venir en contact avec ladite partie correspondante du véhicule automobile, ladite deuxième surface d'appui étant disposée entre les première et troisième surfaces d'appui à un niveau différent desdites première et troisième surfaces d'appui, l'extrémité d'accostage comportant un élément en saillie destiné à participer au positionnement de la traverse par rapport à ladite partie du véhicule selon un axe longitudinal de ladite traverse.

En particulier, les première, et troisième surfaces d'appui peuvent présenter chacune des élévations différentes selon un référentiel donné par la deuxième surface d'appui.

Notamment, la première surface d'appui est incluse dans un premier plan, la deuxième surface d'appui est incluse dans un deuxième plan et la troisième surface d'appui est incluse dans un troisième plan, le premier plan étant disposé entre les deuxième et troisième plans.

Avantageusement, l'extrémité d'accostage comporte une partie centrale, délimitant la deuxième surface d'appui, reliée de part et d'autre à des première et deuxième ailes latérales, délimitant respectivement les première et troisième surfaces d'appui, de l'extrémité d'accostage via des éléments de liaison s'étendant à partir desdites première et deuxième ailes latérales selon une même direction orientée vers la partie centrale.

Selon une réalisation particulière, selon un référentiel orthonormé d'axes X, Y et Z, la traverse s'étend longitudinalement selon l'axe Y, la deuxième aile latérale, la partie centrale et la première aile latérale sont échelonnées successivement selon l'axe X, et les première, deuxième et troisième surfaces présentent des hauteurs différentes selon l'axe Z.

Selon un perfectionnement, l'extrémité d'accostage comporte un élément en saillie destiné à participer au positionnement de la traverse par rapport à ladite partie du véhicule selon un axe longitudinal de ladite traverse.

La traverse peut comporter deux extrémités d'accostage identiques formées à ses extrémités longitudinales opposées.

L'invention est aussi relative à un agencement pour véhicule automobile comportant au moins une partie de véhicule automobile sur laquelle est positionnée une traverse telle que décrite.

En particulier, ladite au moins une partie peut être un arceau de pavillon de toit.

L'invention est aussi relative à un procédé d'assemblage pour véhicule automobile comprenant les étapes suivantes :
- fournir une traverse telle que décrite,
- fournir la partie de véhicule automobile comportant une empreinte correspondant à au moins une portion de l'extrémité d'accostage de ladite traverse,
- positionner l'extrémité d'accostage sur l'empreinte, placement de l'élément en saillie par rapport à l'empreinte, par une mise en butée de l'élément en saillie contre un bord de l'empreinte,
- fixer l'extrémité d'accostage à l'empreinte au niveau des première, deuxième et troisième surfaces d'appui, notamment par soudure.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue de dessus d'un pavillon de toit selon l'art antérieur équipé de traverses d'insonorisation avant et arrière,
- la figure 2 est une vue détaillée de l'accouplement de la traverse avec un montant longitudinal du véhicule automobile,
- la figure 3 illustre une extrémité d'une traverse, notamment de pavillon de toit, accouplée à une partie du véhicule automobile,
- la figure 4 illustre une vue de la figure 3 selon un angle de vue différent,
- la figure 5 est une vue selon la coupe identifiée A-A à la figure 3,
- la figure 6 est une vue selon la coupe identifiée B-B à la figure 3,
- la figure 7 illustre un mode de réalisation dans lequel la traverse est une traverse de pavillon de toit,
- la figure 8 illustre plus en détails l'interaction de la traverse de pavillon de pavillon avec deux montants longitudinaux du véhicule formant notamment des arceaux d'habitable du véhicule automobile.

### Description de modes préférentiels de l'invention

La traverse décrite ci-après diffère de l'art antérieur notamment en ce qu'elle propose une interface spécifique coopérant avec la partie du véhicule automobile où elle doit être montée.

Bien que la traverse décrite ci-après soit préférentiellement une traverse de pavillon de toit, l'invention s'adresse à tout type de traverse qui pourrait être utilisée pour participer à l'insonorisation d'un véhicule automobile.

Dans la présente description, on entend par « traverse acoustique » un élément destiné à être assemblé au sein d'un véhicule automobile et configuré de sorte à participer à l'insonorisation du véhicule automobile. Une telle traverse comporte un tronçon central conformé de sorte à participer à l'absorption d'une onde sonore ou vibratoire, par exemple, ce tronçon central présente une section en « oméga ». Une traverse acoustique sert d'élément de renfort agencé à un endroit du véhicule où l'on va chercher à absorber tout ou partie d'une onde sonore ou vibratoire de telle sorte à la supprimer, ou à modifier sa perception dans l'habitable du véhicule pour conférer aux personnes présentes dans l'habitacle une sensation de confort auditif.

Selon un exemple particulier, lorsque la traverse acoustique est une traverse destinée à coopérer avec un pavillon de toit, elle permet notamment d'atténuer au sein de l'habitacle, le son généré par les impacts de gouttes de pluie ou de grêlons sur une surface extérieure de la carrosserie de toit. Elle contribue également à atténuer les vibrations de la caisse du véhicule résultant du moteur et du roulage.

Selon un mode de réalisation particulier, notamment, visible aux figures 3 à 8 dans lequel la traverse est une traverse de pavillon de toit, il a été représenté un repère orthonormé XYZ défini par le référentiel d'un véhicule automobile reposant sur un sol horizontal via ses roues. En ce sens, l'axe X est un axe longitudinal du véhicule automobile passant par l'arrière et l'avant du véhicule et orienté vers l'arrière du véhicule, l'axe Z représente un axe vertical du véhicule automobile orienté dans une direction opposée au sol, l'axe Y est un axe transversal du véhicule automobile orienté vers la droite d'un conducteur installé au poste de conduite du véhicule automobile. La traverse est ainsi nommée en ce sens qu'elle est orientée suivant la direction transversale Y du véhicule.

De manière plus générale illustrée aux figures 3 à 6, la traverse 2 est configurée de sorte à participer à l'insonorisation d'un véhicule automobile. Par ailleurs, ladite traverse acoustique 2 comporte au moins une extrémité d'accostage 5 destinée à l'assemblage de ladite traverse 2 à une partie 1 correspondante du véhicule automobile.

Selon un mode d'exécution de l'invention, l'extrémité d'accostage 5 comporte une première surface d'appui 6, une deuxième surface d'appui 7 et une troisième surface d'appui 8. Ces trois surfaces d'appui 6, 7, 8 sont distinctes et sont destinées à venir en contact avec ladite partie 1 correspondante du véhicule. Ladite deuxième surface d'appui 7 est disposée entre les première et troisième surfaces d'appui 6, 8 à un niveau différent desdites première et troisième surfaces d'appui 6, 8.

Par « niveau différent », on entend notamment qu'aucune des première et troisième surfaces d'appui 6, 8 n'est coplanaire avec la deuxième surface d'appui 7. En particulier, en prenant comme référentiel la deuxième surface d'appui 7, on peut considérer que les première et troisième surfaces d'appui 6, 8 présentent des hauteurs égales ou différentes selon un référentiel donné par la deuxième surface d'appui 7, notamment ces hauteurs sont constatées selon l'axe Z.

En ce sens, cette conformation spécifique de l'extrémité d'accostage 5 permet de faciliter son indexation par rapport à la partie 1 correspondante du véhicule automobile qui peut alors comporter une empreinte compatible avec la forme extérieure de l'extrémité d'accostage 5.

Selon un mode d'exécution, les première, et troisième surfaces d'appui 6, 8 présentent chacune des élévations/niveaux différent(e)s selon un référentiel donné par la deuxième surface d'appui 7. Autrement dit, lorsque la traverse est une traverse de pavillon de toit, la deuxième surface d'appui 7 présente une première hauteur selon l'axe Z (c'est-à-dire par rapport au sol) différente, et de préférence inférieure, aux hauteurs respectives selon l'axe Z (c'est-à-dire par rapport au sol) des première et troisième surfaces s'appui 6, 8.

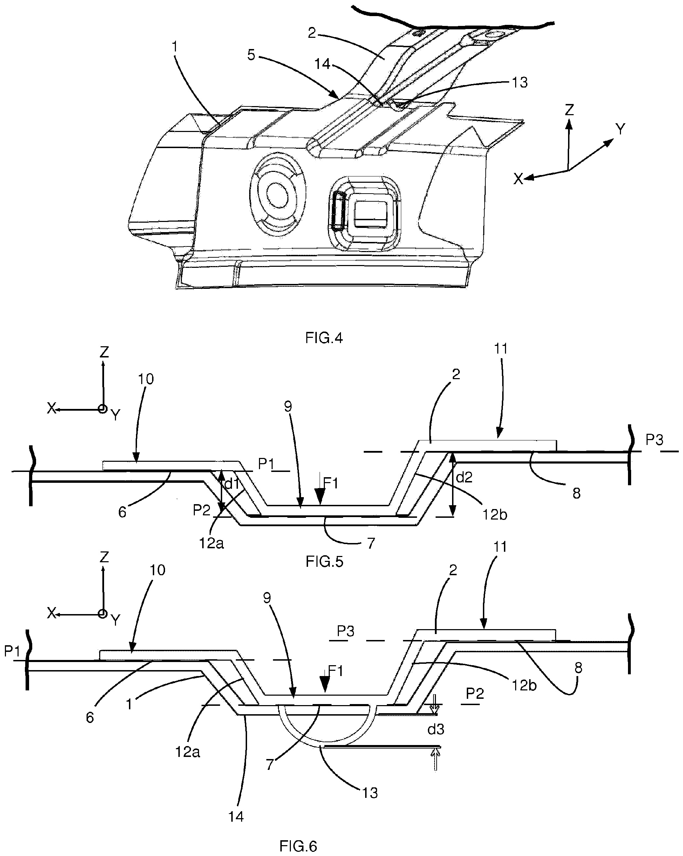

En particulier, de manière combinable à ce qui a été dit précédemment, la première surface d'appui 6 peut être incluse dans un premier plan P1 (figures 5 et 6), la deuxième surface d'appui 7 peut être incluse dans un deuxième plan P2 et la troisième surface d'appui 8 peut être incluse dans un troisième plan P3, le premier plan P1 étant disposé entre les troisième P3 et deuxième P2 plans. Ces trois plans P1, P2, P3 sont préférentiellement parallèles entre eux.

L'utilisation des trois plans/hauteurs différents permet notamment d'assurer une fonction de détrompeur lors de l'assemblage de l'extrémité d'accostage 5 de la traverse acoustique 2 à la partie 1 du véhicule automobile.

Selon une mise en oeuvre (figures 3, 5 et 6), l'extrémité d'accostage 5 comporte une partie centrale 9, délimitant la deuxième surface d'appui 7, reliée de part et d'autre à des première et deuxième ailes latérales 10, 11, délimitant respectivement les première et troisième surfaces d'appui 6, 8, de l'extrémité d'accostage 5 via des éléments de liaison 12a, 12b s'étendant à partir desdites première et deuxième ailes latérales 10, 11 selon une même direction orientée vers la partie centrale 9 (la direction étant indiquée par la flèche F1 aux figures 5 et 6).

Avantageusement, selon un référentiel orthonormé d'axes X, Y et Z, notamment défini (ou non) de la manière décrite ci-avant, la traverse 2 s'étend longitudinalement selon l'axe Y, la deuxième aile latérale 11, la partie centrale 9 et la première aile latérale 10 sont échelonnées successivement selon l'axe X, et les première, deuxième et troisième surfaces 6, 7 et 8 présentent des hauteurs différentes selon l'axe Z.

Selon l'invention, l'extrémité d'accostage 5 comporte un élément en saillie 13 destiné à participer au positionnement de la traverse 2 par rapport à ladite partie 1 du véhicule selon un axe longitudinal de ladite traverse 2 (notamment selon l'axe Y). Cet élément en saillie 13 peut notamment former une butée destinée à participer au positionnement de la traverse 2. En particulier, l'élément en saillie 13 peut venir en contact avec un rebord 14 de la partie 1 correspondante du véhicule automobile.

Préférentiellement, l'élément en saillie 13 présente une saillie d'au moins 5mm, notamment l'élément en saillie 13 présente une saillie d'au moins 5mm (distance d3) par rapport à la normale d'une face de la partie correspondante 1 du véhicule opposée à la face de la partie correspondante 1 du véhicule venant recevoir l'extrémité d'accostage (figure 3). Cet élément en saillie 13 s'étend notamment au niveau d'une zone périphérique de la deuxième surface 7 et se situe entre la deuxième surface d'appui 7 et une zone centrale de la traverse 2.

L'élément en saillie 13 peut adopter une forme d'arc de cercle, notamment obtenu par découpe puis déformation locale de la traverse.

L'élément en saillie 13 facilite le positionnement adéquat de la traverse acoustique suivant la direction transversale Y du véhicule pendant l'assemblage et assure son prémaintien. L'élément 13 est positionné à 3 mm du rebord 14.

Avantageusement, l'extrémité d'accostage 5 présente une épaisseur constante au niveau des première, deuxième et troisième surfaces d'appui 6, 7, 8. En ce sens, en prenant la deuxième surface d'appui 7 incluse dans le deuxième plan P2, la première surface d'appui 6 incluse dans le premier plan P1 et la troisième surface d'appui 8 incluse dans le troisième plan P3, la distance d1 la plus courte séparant le premier plan P1 du deuxième plan P2 est préférentiellement de 3mm, et la distance d2 la plus courte séparant le troisième plan P3 du deuxième plan P2 est préférentiellement de 5mm (figure 5).

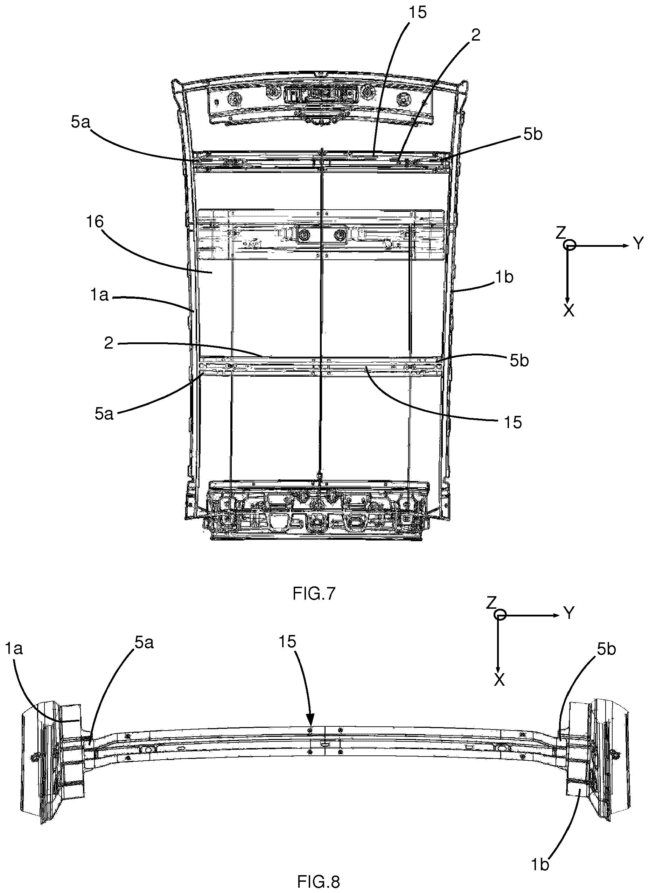

Selon une réalisation, la traverse 2 comporte deux extrémités d'accostage identiques formées à ses extrémités longitudinales opposées. C'est notamment le cas en figures 7 et 8 où les traverses 2a, 2b comportent chacune deux extrémités d'accostage 5a, 5b. Dans ce cas, selon l'axe longitudinal de la traverse 2 on retrouve successivement une première extrémité d'accostage 5a, un tronçon central 15 de la traverse 2 et une deuxième extrémité d'accostage 5b. Les première et deuxième extrémités 5a, 5b d'accostage sont reliées l'une à l'autre par le tronçon central 15 de la traverse 2. Chacune des première et deuxième extrémités d'accostage 5a, 5b d'une même traverse comporte en direction du tronçon central 15 les trois surfaces d'appui 6, 7, 8 puis l'élément en saillie 13.

Sur la figure 7, chaque traverse 2 est destinée à participer à l'insonorisation d'un pavillon de toit 16. En ce sens, les extrémités d'accostage 5a et 5b coopèrent avec des arceaux 1a, 1b participant à la délimitation de l'habitacle. Ici, les arceaux 1a, 1b peuvent comporter une doublure de brancard ou une doublure de montants longitudinaux et ce sont ces doublures qui sont accostées par la traverse 2.

Autrement dit, l'invention est aussi relative à un agencement pour véhicule automobile comportant au moins une partie de véhicule automobile, notamment un arceau de pavillon de toit 1a, 1b, sur laquelle est positionnée une traverse 2 telle que décrite. Ledit arceau 1a, 1b forme alors la partie du véhicule automobile sur laquelle l'extrémité d'accostage est positionnée. En particulier, l'agencement comporte deux parties de véhicule identifiées par la suite comme une première partie de véhicule 1a et une deuxième partie de véhicule 1b. Les première et deuxième parties 1a, 1b du véhicule sont accostées chacune par une extrémité d'accostage 5a, 5b correspondante de la traverse 2. Les première et deuxième parties 1a, 1b du véhicule peuvent comporter chacune une empreinte de réception de l'extrémité d'accostage 5a, 5b correspondante et chacune être configurée de sorte à épouser en tout ou partie les première, deuxième et troisième surfaces d'appui 6, 7, 8 de l'extrémité d'accostage correspondante. Notamment, les éléments en saillies 13 de chacune des extrémités d'accostage sont en contact avec un bord correspondant de la première ou deuxième partie 1a, 1b associée du véhicule.

Avantageusement, chaque élément de liaison 12a ou 12b s'étendant à partir d'une desdites première et deuxième ailes latérales 10, 11 selon une même direction orientée vers la partie centrale 9, délimite avec l'une ou l'autre des première et deuxième parties 1a, 1b du véhicule, une poutre transversale de section creuse ce qui permet une rigidité améliorée de chacune des extrémités d'accostage 5a, 5b.

L'invention est aussi relative à un procédé d'assemblage pour véhicule automobile comprenant les étapes suivantes : fournir une traverse 2 telle que décrite ; fournir la partie 1, 1a, 1b de véhicule automobile comportant une empreinte correspondant à au moins une portion de l'extrémité d'accostage 5 de ladite traverse 2 ; positionner l'extrémité d'accostage sur l'empreinte, fixer l'extrémité d'accostage 5 à l'empreinte au niveau des première, deuxième et troisième surfaces d'appui 6, 7, 8, notamment par soudure.

En particulier, l'empreinte est telle qu'elle épouse au moins une partie de chaque surface d'appui 6, 7, 8 lorsque la traverse 2 est en position d'assemblage avant l'étape de fixation.

L'étape de fixation peut être réalisée via l'utilisation de pinces de soudure réalisant au moins un point de soudure entre l'empreinte et la traverse 2 au niveau de chacune des première, deuxième et troisième surfaces d'appui 6, 7, 8.

Dans le cadre du procédé, lorsque l'extrémité d'accostage 5 comprend un élément en saillie 13, l'étape de positionnement comporte une étape de placement de l'élément en saillie 13 par rapport à l'empreinte, notamment par une mise en butée de l'élément en saillie 13 contre un bord 14 de l'empreinte.

De manière générale, les formes adoptées par l'extrémité d'accostage permettent un maintien en position de la traverse avant soudure avec une tolérance de plus ou moins 3mm notamment selon l'axe X et l'axe Y.

En particulier, dans le cadre du pavillon de toit à insonoriser, le tronçon central 15 présente une section en oméga dont la cavité est refermée par un élément de carrosserie délimitant au moins une partie du pavillon de toit.

## Revendications

1. Traverse (2) configurée de sorte à participer à l'insonorisation d'un véhicule automobile, ladite traverse acoustique (2) comportant au moins une extrémité d'accostage (5) destinée à l'assemblage de ladite traverse (2) à une partie correspondante (1) du véhicule automobile, l'extrémité d'accostage (5) comporte des première, deuxième et troisième surfaces d'appui (6, 7, 8) distinctes destinées à venir en contact avec ladite partie correspondante (1) du véhicule automobile, ladite deuxième surface d'appui (7) étant disposée entre les première et troisième surfaces d'appui (6, 8) à un niveau différent desdites première et troisième surfaces d'appui (6, 8), **caractérisée en ce que** l'extrémité d'accostage (5) comportant un élément en saillie (13) destiné à participer au positionnement de la traverse (2) par rapport à ladite partie (1) du véhicule selon un axe longitudinal de ladite traverse (2).

2. Traverse selon la revendication précédente, **caractérisée en ce que** les première, et troisième surfaces d'appui (6, 8) présentent chacune des élévations différentes selon un référentiel donné par la deuxième surface d'appui (7).

3. Traverse selon l'une des revendications précédentes, **caractérisée en ce que** la première surface d'appui (6) est incluse dans un premier plan (P1), la deuxième surface d'appui (7) est incluse dans un deuxième plan (P2) et la troisième surface d'appui (8) est incluse dans un troisième plan (P3), le premier plan (P1) étant disposé entre les deuxième et troisième plans (P2, P3).

4. Traverse selon l'une des revendications précédentes, **caractérisée en ce que** l'extrémité d'accostage (5) comporte une partie centrale (9), délimitant la deuxième surface d'appui (7), reliée de part et d'autre à des première et deuxième ailes latérales (10, 11), délimitant respectivement les première et troisième surfaces d'appui (6, 8), de l'extrémité d'accostage (5) via des éléments de liaison (12a, 12b) s'étendant à partir desdites première et deuxième ailes latérales (10, 11) selon une même direction orientée vers la partie centrale (9).

5. Traverse selon la revendication précédente, **caractérisée en ce que** selon un référentiel orthonormé d'axes X, Y et Z, la traverse (2) s'étend longitudinalement selon l'axe Y, la deuxième aile latérale (11), la partie centrale (9) et la première aile latérale (10) sont échelonnées successivement selon l'axe X, et les première, deuxième et troisième surfaces (6, 7, 8) présentent des hauteurs différentes selon l'axe Z.

6. Traverse selon l'une quelconque des revendications précédentes, **caractérisée en ce qu'**elle comporte deux extrémités d'accostage (5a, 5b) identiques formées à ses extrémités longitudinales opposées.

7. Agencement pour véhicule automobile comportant au moins une partie de véhicule automobile sur laquelle est positionnée une traverse selon l'une quelconque des revendications précédentes.

8. Agencement selon la revendication précédente, **caractérisé en ce que** ladite au moins une partie est un arceau de pavillon de toit.

9. Procédé d'assemblage pour véhicule automobile comprenant les étapes suivantes :
- fournir une traverse (2) selon l'une quelconque des revendications 1 à 7,
- fournir la partie (1) de véhicule automobile comportant une empreinte correspondant à au moins une portion de l'extrémité d'accostage (5, 5a, 5b) de ladite traverse (2),
- positionner l'extrémité d'accostage (5a, 5b, 5) sur l'empreinte, placement de l'élément en saillie (13) par rapport à l'empreinte, par une mise en butée de l'élément en saillie (13) contre un bord (14) de l'empreinte,
- fixer l'extrémité d'accostage (5a, 5b, 5) à l'empreinte au niveau des première, deuxième et troisième surfaces d'appui (6, 7, 8), notamment par soudure.

## Patentansprüche

1. Querträger (2), der so ausgelegt ist, dass er zur Schalldämpfung eines Kraftfahrzeugs beiträgt, wobei der schalldämpfende Querträger (2) mindestens ein Ankopplungsende (5) aufweist, das zur Montage des Querträgers (2) an einem entsprechenden Teil (1) des Kraftfahrzeugs vorgesehen ist, wobei das Ankopplungsende (5) eine erste, zweite und dritte separate Auflagefläche (6, 7, 8) aufweist, die den entsprechenden Teil (1) des Kraftfahrzeugs berühren sollen, wobei die zweite Auflagefläche (7) zwischen der ersten und dritten Auflagefläche (6, 8) auf einer anderen Höhe als die erste und dritte Auflagefläche (6, 8) angeordnet ist, **dadurch gekennzeichnet, dass** das Ankopplungsende (5) ein vorspringendes Element (13) aufweist, das zur Platzierung des Querträgers (2) bezogen auf den Teil (1) des Fahrzeugs in einer Längsachse des Querträgers (2) beitragen soll.

2. Querträger nach dem vorhergehenden Anspruch, **dadurch gekennzeichnet, dass** die erste und dritte Auflagefläche (6, 8) jeweils ein unterschiedliches Höhenmaß nach einem Bezugssystem aufweisen, das durch die zweite Auflagefläche (7) vorgegeben ist.

3. Querträger nach einem der vorhergehenden Ansprüche, **dadurch gekennzeichnet, dass** die erste Auflagefläche (6) in einer ersten Ebene (P1) enthalten ist, die zweite Auflagefläche (7) in einer zweiten Ebene (P2) enthalten ist und die dritte Auflagefläche (8) in einer dritten Ebene (P3) enthalten ist, wobei die erste Ebene (P1) zwischen der zweiten und dritten Ebene (P2, P3) angeordnet ist.

4. Querträger nach einem der vorhergehenden Ansprüche, **dadurch gekennzeichnet, dass** das Ankopplungsende (5) einen mittigen Teil (9) aufweist, der die zweite Auflagefläche (7) abgrenzt und auf beiden Seiten mit einem ersten und zweiten Seitenschenkel (10, 11) des Ankopplungsendes (5), die die erste beziehungsweise dritte Auflagefläche (6, 8) abgrenzen, über Verbindungselemente (12a, 12b) verbunden ist, die vom ersten und zweiten Seitenschenkel (10, 11) aus in ein und derselben Richtung zum mittigen Teil (9) hin ausgerichtet verlaufen.

5. Querträger nach dem vorhergehenden Anspruch, **dadurch gekennzeichnet, dass** der Querträger (2) in einem orthonormierten Bezugssystem aus den Achsen X, Y und Z längs in Richtung der Achse Y verläuft, der zweite Seitenschenkel (11), der mittige Teil (9) und der erste Seitenschenkel (10) in Richtung der Achse X hintereinander angeordnet sind, und die erste, zweite und dritte Fläche (6, 7, 8) in Richtung der Achse Z unterschiedliche Höhen aufweisen.

6. Querträger nach einem der vorhergehenden Ansprüche, **dadurch gekennzeichnet, dass** er zwei identische Andockenden (5a, 5b) aufweist, die an seinen gegenüberliegenden Längsenden ausgebildet sind.

7. Anordnung für Kraftfahrzeug, die mindestens einen Kraftfahrzeugteil aufweist, an dem ein Querträger nach einem der vorhergehenden Ansprüche platziert ist.

8. Anordnung nach dem vorhergehenden Anspruch, **dadurch gekennzeichnet, dass** der mindestens eine Teil ein Dachhimmelbogen ist.

9. Montageverfahren für Kraftfahrzeug, das folgende Schritte umfasst:
- Bereitstellen eines Querträgers (2) nach einem der Ansprüche 1 bis 7,
- Bereitstellen des Teils (1) des Kraftfahrzeugs, der eine Eindrückung aufweist, die zumindest einem Abschnitt des Ankopplungsendes (5, 5a, 5b) des Querträgers (2) entspricht,
- Platzieren des Ankopplungsendes (5a, 5b, 5) auf der Eindrückung, Anordnen des vorspringenden Elements (13) bezogen auf die Eindrückung durch Anstoßen des vorspringenden Elements (13) gegen einen Rand (14) der Eindrückung,
- Fixieren des Ankopplungsendes (5a, 5b, 5) an der Eindrückung im Bereich der ersten, zweiten und dritten Auflagefläche (6, 7, 8), insbesondere durch Schweißen.

## Claims

1. Crossmember (2) configured so as to contribute to the soundproofing of a motor vehicle, said acoustic crossmember (2) comprising at least one docking end (5) intended for attaching said crossmember (2) to a corresponding part (1) of the motor vehicle, the docking end (5) comprising first, second and third separate support surfaces (6, 7, 8) intended to come into contact with said corresponding part (1) of the motor vehicle, said second support surface (7) being arranged between the first and third support surfaces (6, 8) at a different level from said first and third support surfaces (6, 8), **characterized in that** the docking end (5) comprises a protruding element (13) intended to contribute to the positioning of the crossmember (2) relative to said part (1) of the vehicle in a longitudinal axis of said crossmember (2) .

2. Crossmember according to the preceding claim, **characterized in that** the first and third support surfaces (6, 8) each have different elevations relative to a reference point given by the second support surface (7).

3. Crossmember according to either of the preceding claims, **characterized in that** the first support surface (6) is contained in a first plane (P1), the second support surface (7) is contained in a second plane (P2), and the third support surface (8) is contained in a third plane (P3), the first plane (P1) being arranged between the second and third planes (P2, P3).

4. Crossmember according to one of the preceding claims, **characterized in that** the docking end (5) comprises a central part (9) delimiting the second support surface (7) and connected on either side to first and second lateral wings (10, 11), respectively delimiting the first and third support surfaces (6, 8), of the docking end (5) via connecting elements (12a, 12b) which extend from said first and second lateral wings (10, 11) in a first direction oriented towards the central part (9).

5. Crossmember according to the preceding claim, **characterized in that** following an orthonormal reference system of axes X, Y and Z, the crossmember (2) extends longitudinally along axis Y; the second lateral wing (11), the central part (9) and the first lateral wing (10) are staggered successively along axis X; and the first, second and third surfaces (6, 7, 8) have different heights along axis Z.

6. Crossmember according to any of the preceding claims, **characterized in that** it comprises two identical docking ends (5a, 5b) formed at its opposing longitudinal ends.

7. Arrangement for a motor vehicle, comprising at least one part of a motor vehicle on which a crossmember according to any of the preceding claims is positioned.

8. Arrangement according to the preceding claim, **characterized in that** said at least one part is a roof bow.

9. Method for assembling a motor vehicle comprising the following steps:
- supplying a crossmember (2) according to any of Claims 1 to 7,
- supplying the part (1) of the motor vehicle comprising an indentation corresponding to at least a portion of the docking end (5, 5a, 5b) of said crossmember (2),
- positioning the docking end (5a, 5b, 5) on the indentation, placing the protruding element (13) relative to the indentation by bringing the protruding element (13) to rest against an edge (14) of the indentation,
- fixing the docking end (5a, 5b, 5) to the indentation at the level of the first, second and third support surfaces (6, 7, 8), in particular by welding.
